# EUROPEAN PATENT APPLICATION

(11) **EP 1 906 071 A2**
(43) Date of publication of application: **02.04.2008**
(21) Application number: 06784056.1
(22) Date of filing: 30.06.2006
(51) Int. Cl.: F16L 9/12, F16L 9/14, F17C 1/00, F17C 1/16

(54) **COMPOSITE ARTICLE FOR TRANSPORTING AND/OR STORING LIQUID AND GASEOUS MEDIA AND A METHOD FOR THE PRODUCTION THEREOF**

(30) Priority: 30.06.2005 RU 2005120314; 30.06.2005 RU 2005120315; 31.05.2006 RU 2006118899; 31.05.2006 RU 2006118896; 31.05.2006 RU 2006118894
(71) Applicant: Vinarsky, Vladimir Stepanovich, Moscow, 121108 (RU); Grachev, Andrei Alexandrovich, Moscow, 111531 (RU); Martsynovsky, Vasily Vladimirovich, Moscow, 123056 (RU); Panokov, Alexandr Ivanovich, Moscow, 121293 (RU)
(72) Inventor: Vinarsky, Vladimir Stepanovich, Moscow, 121108 (RU); Grachev, Andrei Alexandrovich, Moscow, 111531 (RU); Martsynovsky, Vasily Vladimirovich, Moscow, 123056 (RU); Panokov, Alexandr Ivanovich, Moscow, 121293 (RU)
(74) Representative: HOFFMANN EITLE
(86) International application number: PCT/RU2006/000345
(87) International publication number: WO 2007/004919

(57) **Abstract**

The invention relates to reinforced composite articles for conveying and/or storage of liquid and gaseous media comprising an internal sealing layer of polyolefin, a sevilene layer applied thereon, an external load-bearing layer of a polymerized composite material and an additional layer formed by a fibrous structure providing for an efficient cohesion of said sealing and load-bearing layers, and disposed between the layers of sevilene and of the composite polymer material. The fibrous structure can be made of glass fiber, aramide fiber, carbon fiber and basalt fiber. A process for producing the disclosed articles is also proposed.

## Description

### Field of the invention

The invention relates to reinforced multilayer articles manufactured of plastics designed for conveying and/or storage of liquid and gaseous media, as well as to processes for manufacturing such articles.

### Background of the invention

Use of plastic articles, in particular such as pipes, cylinders and various reservoirs for storage and conveying various liquids and gases is widely known in the art. Such articles are typically manufactured so that liquid and/or gaseous media stored/conveyed therein are in contact with a layer of polyolefin material, typically polyethylene or propylene. These materials are very suitable for manufacturing such layers, since they are characterized by exclusively high parameters of impermeability for liquids/gases, inertness to a majority of aggressive media, as well as by a low hydrodynamic resistance, by no tending to formation of solid depositions thereon and by environmental safety.

However, said polyolefin materials have insufficiently high strength characteristics limiting their resistance to internal medium pressure and to external mechanic effects (in particular those that could damage a pipe). Thus, in the widely used polyethylene brands PE63, PE80 and PE100 the MRS (the minimum required strength) index is 6.3 MPa, 8.0 MPa and 10.0 MPa, respectively. So low strength allows for using polyethylene pipes under internal operational pressure of not more than 12 atm, at the same time, with a pipe wall thickness having to be about 0.1 of the pipe diameter.

Therefore, manufacturing such articles in the form of multilayer products with reinforcement is widely used in the art. At that, these reinforced articles (pipes etc.) comprise at least two layers: an internal layer of a polyolefin material suitable for contacting with transported liquids/gases as described above (a sealing layer), and an external reinforcing, or a load-bearing layer imparting strength to the article and performing a protective function. As a rule, one or more intermediate layers providing for adhesion of the mentioned internal and external layers with formation of an integrated composite article structure can also be present.

Since strength of a reinforcing material can by an order enhance the strength of polyolefines (in particular polyethylene), then thickness of the sealing layer can be significantly diminished. Pipes manufactures in this way have a high strength, sail-safety repairability at a significant lowering their material capacity and cost (about by 70% by mass and by 50% by cost for polyethylene pipes). At the same time, all the advantages listed above and related to the use of polyolefines as a sealing layer with which stored/transported media are contacting, are preserved.

However, producing similar multilayer structures involves some difficulties.

Thus, a process for manufacturing a combined pipe comprising separate manufacturing internal and external layers thereof, applying a polymer primer layer onto matched surfaces of the shells assemblage of shells and solidification of a primer layer is known (US No. 3,886,024 C1, 27.05.1975).

However, solidification of the sheaths run at high temperatures (up to 177°C), results in a poor repairability and a low reliability of pipes produced.

A process for manufacturing a combined pipe comprising mounting a polyethylene parison tube on a mandrel, applying a sevilene layer thereon, winding a fiber glass material, followed by thermal treatment causing polymerization and cooling, is also known (the RU patent No. 209,676 C1, 10.11.1997).

However, during embodiment of such process, expanding the polyethylene parison tube leads to the loss of the parison wall stability along the axis and to formation of cavities between the coil and the polyethylene parison that in polymerization of the fiberglass material results in non-uniformity of the pipe wall.

Furthermore, a process for manufacturing a combined pipe comprising mounting a polyolefin (polyethylene) parison tube on a mandrel, applying a sevilene layer thereon, winding a fiberglass material, subsequent thermal treatment causing polymerization and cooling, and removing the finished pipe is known; in embodiment of this process, the parison tube having internal diameter less than the mandrel diameter is taken, and the parison is mounted on the mandrel in interference fit, or first the parison tube is sized to a diameter greater than the mandrel diameter, and is mounted on the mandrel in a clearance fit, and thereafter, it is hold until a tight joining is achieved (RU patent Nº 2,150,629 C1, 19.10.1998).

The last process is the closest one to the proposed invention by a combination of features. However, this process also has drawbacks to which a low adhesion of the sevilene layer to fiberglass should be attributed. The linear thermal expansion coefficient of polyolefines is by two orders higher than that of fiberglass. Therefore, in positive temperatures, the internal polyolefin layer being expanded exerts pressure on the external fiberglass layer. In negative temperatures, the internal layer diameter diminishes that leads to its tearing off from the external layer, and as a sequence, to stratification of the pipe construction. The indicated circumstances result in shortening exploitation terms and lowered reliability of pipes.

In addition, the known process is labor consuming in view of the need of parison mounting on a mandrel, thermal treatment of a pipe in an oven and removing it from the mandrel the last operation being capable of causing disintegration of the pipe.

### Summary of the invention

An object of the present invention was the development of a process for manufacturing an article, which would allow for producing an article, in particular a pipe, with an enhanced operating life in a wide range of temperatures in concurrent simplification of technological process.

Technical result is achieved by that in the process for manufacturing a composite pipe comprising the steps of applying a sevilene layer on a tubular polyolefin parison (which further forms an internal layer), winding an external layer of a composite polymer material (which further forms a load-bearing layer) with subsequent polymerization thereof, an additional step is introduced. The additional step consists in that on the sevilene layer before winding the indicated composite polymer material, a fibrous structure is placed, which structure is capable of providing an efficient adhesion of a sealing layer covered by sevilene and the load-bearing layer, and the indicated fibrous structure is heated up to the temperature providing for melting the sevilene layer. At the same time, for realizing the present invention, a fibrous structure is selected having a good adhesion to the both the sevilene coating of the sealing layer and the composite polymer material forming the load-bearing layer.

Similar process may be used for producing other composite articles for conveying and/or storage of liquids and gases, along with pipes, such as various containers, reservoirs, cylinders etc. when using a polyolefin half-finished article of a respective shape.

The present invention also relates to composite articles for conveying and/or storage of liquid and gaseous media which article comprise an internal sealing polyolefin layer; a sevilene layer coated thereon; an external load-bearing layer of a polymerized composite material; and an additional layer formed by a fibrous structure possessing a good adhesion to the both sevilene coating of the sealing layer and the composite polymer material forming the load-bearing layer, disposed between the said layers made of sevilene and of polymerized composite material.

The disclosed articles can be manufactured according to the process of the present invention described above. At the same time, various materials may be selected, as the external load-bearing layer, depending on the requirements to exploitation characteristics of the articles. The additional layer of the fibrous structure is accordingly selected taking into consideration a selected material of the external layer.

### Description of figures

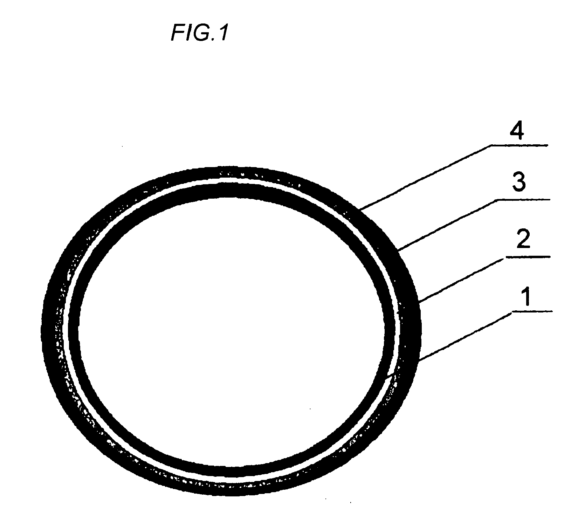

Fig. 1 shows a cross section of the pipe demonstrating the structure of the pipe layers according to the invention.

### Detailed description of the invention

An internal sealing layer of the article according to the invention consists of polyolefines. The term "polyolefines" has the generally accepted sense, i.e. it relates to polymers manufactured using the known processes of homo- and copolymerization of olefin monomers. In particular, typical widely used representatives of polyolefines are polyethylene, polypropylene, polybutene, polyisobutylene, poly-4-methyl-1-pentene. Polymers produced from substituted olefin monomers such as PVC (polyvinyl chloride) and ABS (copolymer of acrylonitryle, butadiene and styrene) can be also used. Polyethylene and polypropylene are the most preferable for use in the present invention.

For the objects of the present invention, any known brands of polyethylene and polypropylene can be in principle used. For example, suitable are polyethylenes PE63 according to GOST 16338-85 and TU 6-5-1983-87 (manufactured for example by JSC "Kazan'orgsintez") and PE80 according to TU 6-11-00206368-25-93 (manufactured for example by JSC "Stavropolpolimer") The imported polyethylene PE 100 can be also used.

The required half-finished articles of tubular or another shape can be manufactured using standard molding processes well known in the art such as for example pressure molding, pressure-die casting, extrusion, molding on rotary machines as well as coil winding with a flat band of different profile, on a standard equipment. Industrially manufactured half-finished articles can be also used. For example, suitable are the half-finished articles manufactured by "Borodino-Plast" Ltd. (Mozhaisk, Moscow region), JSC "Evrotrubplast" (Moscow) and "Rotoplast" Ltd. (Mytischi, Moscow region).

Sevilene used for applying a layer (a coating) directly to the internal sealing layer in the form of a half-finished article, is an ethylene and vinyl acetate copolymer, that is, it belongs to polyolefines, wherein a portion of monomers are substituted olefins. Such composition of sevilene causes an enhanced adhesion thereof to different materials, including a good adhesion of the sevilene layer to the internal sealing layer according to the invention.

Kinds of sevilene differ from each other by vinyl acetate content, which can be from 5 to 30% wt. Sevilene is widely manufactured in industry, in particular, five basic brands of sevilene differing by vinyl acetate content are manufactured in the RF according to TU 6-05-1636-97.

An important field of sevilene use is utilization thereof for manufacturing hot-melt glues. Such glues do not comprise solvents and represent solids at room temperature; while they are used in a molten form. A suitable temperature for using hot-melt glues based on sevilene depends on vinyl acetate content and can be from 70 to 200°C.

For example, sevilene manufactured by JSC "Sevilene" (Kazan') according to TU 6-05-1636-97 is suitable for the purposes of the present invention.

Composite polymer materials used in the present invention for manufacturing the external load-bearing layer are materials consisting of two or more components the main of which are reinforcing fibers of at least one type and a matrix binding them.

Such composite materials suitable for the purposes of the present invention are in principle well known in the art. Suitable materials possess high strength and rigidity characteristics while having a low density.

Description of different types of composite polymer materials and processes for producing the same can be found for example in the edition "Handbook of composites", ed. by George Lubin, 1982 by Van Nostrand Reinhold Company Inc. ©).

Different types of reinforcing fibers can be used in the composite polymeric materials according to the invention, in particular those described in the source indicated above. The main types of reinforcing fibers suitable according to the invention are glass fibers, basalt fibers, carbon fibers and aramide fibers.

Glass fibers (fiberglass) may be of different brands with different content of silica (such as from 60 to 75%) and oxides of other metal elements.

Continuous glass fibers are produced from quartz sand melt and other additives using conventional processes, in particular on the drawing machines for drawing of glass fibers from a bulk of glass melt through platinum dies. Industrially manufactured brands of glass fibers and processes for industrial production thereof are described for example in the indicated source "Handbook of composites".

Suitable for use in composite polymeric materials according to the present invention are for example glass fibers of the brands BM-1 (VM-1), BMII (VMP), PBMH (RVMN), YII-68 (UP-68), YII-73 (UP-73) manufactured in Russia and glass fibers of the brands E, S, S-994 manufactured in the USA.

Basalt fibers belong to the class of inorganic chemical fibers produced from mineral raw material. They are close to glass fibers by composition and characteristics, and they are also well known and wide-spread. Processes for producing them are also similar to those for producing glass fibers. Suitable basalt fibers can be for example the fibers manufactured under the brands PB-9 (RB-9) and PB-12 (RB-12) (TU 023.007-89).

Also known in the art are carbon (graphite) fibers formed by graphite crystalline structures (of different ordering degree). The generally accepted production technologies of manufacturing carbon fibers are based on thermal treatment (900-3000°C) of organic fibers with a large content of carbon, in particular fibers of cellulose hydrate, polyacrylonitryl, pitches, polyesters, polyamides, polyvinyl alcohol, poly-p-phenyl and others. Characteristics of different carbon fibers and processes of manufacturing the same can be found in the handbook mentioned above and publications indicated therein.

Suitable for use according to the present invention are for example such brands of carbonic fibers as BMH-3 (VMN-3), BMH-4 (VMN-4), "Kulon", JIY-2 (LU-2), JIY-3 (LU-3), JIY-4 (LU-4), JIY-15 (LU-15), 3JIYP (ELUR) (manufactured in Russia), Tornel-300, Tomel-400, Tornel-600, Magnamit, M40, M70 (manufactured in the USA), "Toreika" (manufactured in Japan).

Aramide fibers are aromatic polyamide fibers. They are typically produced by the process of polycondensation of diamines and dicarboxylic acid halides at low temperatures, for example by polycondensation of terephthaloyl chloride and phenylene diamine (the Kevlar fiber). Fibers are spun according to the known technologies, in particular from solutions in strong acids according to the "dry-wet" process. A more detailed description of aramide fibers and processes for manufacturing the same can be found in the handbook mentioned above.

For use according to the present invention are in particular suitable such brands of fibers as BH 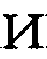 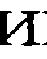 BJIOH (VNIIVLON), APMOC (ARMOS), PYCAP (RUSAR), CBM (SVM) (manufactured in Russia); Terlon, Kevlar-29, Kevlar-49 (manufactured in the USA), "Arenka" (produced in the Netherlands).

A binding matrix is another component necessary for producing composite polymer materials according to the invention. Different polymer resins mainly epoxy, polybutadiene, phenol formaldehyde and polyamide resins are used for producing the matrix. Different types of suitable binders are described in the sources of the prior art, in particular in the handbook mentioned above and in the publications recited therein. In particular, in the composite polymer materials of the present invention, the resins ED-10, ED-20 (manufactured in the RF), Polypol, for example Polypol-385 (manufactured in Turkey), the resins manufactured by the Shell company (the Netherlands) etc. can be used.

During polymerization (curing) of binding resins, they bind reinforcing fibers with each other and form a monolith composite material. Resin hardening can be achieved when affected by temperature or polymerization catalysts. Particular polymerization processes, reagents used and operational modes of the processes are well known (for example from the handbook mentioned above).

Composite materials based on different fibers and resins binding them possess high strength and rigidity characteristics while having a small density.

At the same time, characteristics of the composite materials so produced depend on type and properties of the reinforcing fibers used in them. Thus, composite materials with carbon fibers (carboplastics) have high strength characteristics as well as an enhanced modulus of elasticity and impact strength as compared to composite materials with glass fibers (fiberglass). Composite materials with aramide fibers (organoplastics) in their turn have an enhanced strength in break strain, as well as the least density in a small break strain as well as the least density of all the composite materials under consideration. Advantage of basaltoplastic consists in a low cost of this type of reinforcing fibers while retaining acceptable physical-chemical characteristics of a load-bearing layer of basaltoplastic.

The fibrous structure used for manufacturing an additional layer that provides for improved adhesion between a sealing layer (coated with sevilene) and a load-bearing layer, is manufactured based on the fibers similar to those which are used as reinforcing ones in the composite polymer material of the load-bearing layer as described above. In particular, such structures can be based on glass fibers, basalt fibers, carbon fibers or aramide fibers.

Accordingly, the brands of fibers suitable for using in the fiber structure of the present invention correspond to those described above for the reinforcing fibers of the composite polymer material.

The fibers listed above are subjected to processing into rovings, spun threads, braids, fabrics and other textile half-finished articles according to the known techniques.

The most suitable fiber structures for using according the present invention are twisted threads (yarno), braids, meshes, tapes and fabrics.

In manufacturing articles according to the present invention, a sevilene layer is first applied on the internal sealing layer. As was indicated above, a composition of sevilene determines a good binding the sevilene layer with the internal polyolefin layer of the article according to the invention.

Then the fibrous structure of the invention is applied on the sevilene layer deposited in the form of a sheath. For example, such application can be performed by winding a thread, a tape, a fabric or other suitable structure.

Then said fiber structure is heated up to the temperature providing for melting sevilene layer.

Sevilene has a high adhesion to the used fiber and heating up to the temperature at which sevilene melting is achieved, provides for gluing sevilene to the fiber and penetration of sevilene melt into the fiber structure, and, as a result, a good adhesion between the fibrous structure layer and sevilene.

Then the composite polymer material forming the load-bearing layer is applied (for example wound), and polymerization thereof is carried out. Polymerization is effected by temperature (thermal, or hot cure) or by polymerization catalysts (cold cure) using the processes known in the art.

The polymerized composite material binds well to an intermediate layer of the fibrous structure, since this one comprises fibers of the same type as those included into the composite material compositions as reinforcing fibers. Preferably, fibers of the composite material and the fibrous structure are the fibers of the same type.

Thus, the use of the indicated intermediate layer of the fibrous material leads to a significant enhancement of adhesion of all the layers of the whole article and, accordingly, to a significant improvement of working characteristics thereof, and first of all - to widening temperature range to the limits of at least from -70 to +60°C.

An article, manufactured according to the present invention can first of all be pipes for conveying of liquid and gaseous media. Furthermore, according to the present invention, cylinders or reservoirs for storage and/or conveying of liquid and gaseous media are manufactured. As used herein, the term "cylinder" relates to a container, wherein the mentioned media are contained under elevated pressure, whereas the term "reservoir" means a container filled with a medium (mainly liquid) under a pressure close to atmospheric pressure, for example bottles, tanks, cisterns etc.

Examples of preparing articles according to the invention are presented below that are intended for illustration of the invention and in no way should be construed as limiting the scope thereof.

### Example 1

A tubular polyethylene parison was fixated at the ends in the actuating mechanisms of a coil winder. A winding zone during rotation of the parison tube is supported by special lunettes, that prevent sagging the parison during application of subsequent layers thereon, in particular in exerting pressure on it created by a tape strain in winding.

To the indicated parison tube forming the internal layer 1 of the pipe, the sevilene layer 2 was applied then a glass fiber tope was bound (layer 3). Simultaneously, during winding, the parison was heated at 70-100°C by a burner flame or a hot air until sevilene melting was achieved.

Following application of the glass fiber layer, a layer 4 of a composite fiberglass material in the form of threads, braids, tope or fabric was wound onto the produced parison.

Then the produced pipe was subjected to thermal treatment the temperature and timing parameters of which were determined by curing conditions of a binder used in the fiberglass.

As a result, a composite pipe with a fiberglass load-bearing layer was manufactured.

### Example 2

The process similar to that described in Example 1 was used, but cold curing with using a polymerization catalyst was used for curing of the layer 4 in place of thermal treatment.

As a result, a composite pipe with a fiberglass load-bearing layer was manufactured.

### Example 3

The process similar to that described in Example 1 was used, but a basalt plastic material was used for layer 4 in place of the fiberglass material.

As a result, a composite pipe with a basalt plastic load-bearing layer was manufactured.

### Example 4

The process similar to that described in Example 1 was used, but a carbon plastic material was used for layer 4 in place of thermal treating the fiberglass material.

As a result, a composite pipe with a carbon plastic load-bearing layer was manufactured.

### Example 5

The process similar to that described in Example 1 was used, but an organoplastic material with aramide reinforcing fibers was used for layer 4 in place of the fiberglass material.

As a result, a composite pipe with an organoplastic load-bearing layer was manufactured.

### Example 6

Specimens of pipes 6 m long having diameter 0.315 m produced according to the claimed process with a 4.9 mm thick sealing layer of polyethylene PE63 were subjected to tests for a static, cyclic and thermodynamic strength.

In hydrostatic tests, the composite pipes were loaded by a hydrostatic operating pressure 3.0 MPa and a pressure at which the pipes were destructed. Destruction was observed at 10.2 MPa in the following characteristics of the composite material (fiberglass): breaking strength - 420 MPa, modulus of elasticity - 24 GPa.

Cyclic tests were carried out under loading by internal hydrostatic pressure was changed from 0 to 100% of the exploitation pressure equal to 3.0 MPa. Number of cycles was 500. Then hydrostatic tests for destruction were carried out. Destructing pressure value was 10.0 MPa.

Thermodynamic tests of the sheaths were carried out by cooling them down to -50°C with exposure for 4 hours, then by heating up to 50°C with exposure also for 4 hours. The number of such cycles was equal to 50. In addition, following the tests the sheaths were for 16 hours exposed to the temperature of -70°C. In the pipe specimens subjected to the indicated tests, delamination was not observed.

The above tests have supported adhesive strength of the sealing and load-bearing layers.

In general, the results of the conducted tests show that the articles of the invention, in particular pipes, are suitable for use in the housing maintenance and utilities infrastructure, in oil and gas pipelines and as sewage system pipes.

## Claims

1. A process for manufacturing a composite article for conveying and/or storage liquid and gaseous media comprising at least an internal sealing layer and an external load-bearing layer, comprising the steps of:
applying a sevilene layer onto a polyolefin parison tube forming said internal layer;
placing a fibrous structure over said sevilene layer, the fibrous structure having a good adhesion to the both sevilene coating of the sealing layer and the composite polymer material forming the load-bearing layer and thereby providing an efficient cohesion between said sealing and load-bearing layers, and subsequently heating said fibrous structure up to a temperature providing for melting the sevilene layer;
followed by winding a composite polymer material forming the load-bearing layer, and performing polymerization.

2. The process according to claim 1 **characterized in that** the used parison tube is made of polyethylene.

3. The process according to claim 1 **characterized in that** the used parison tube is made of polypropylene.

4. The process according to claim 1 **characterized in that** the composite polymer material is selected from the group including fiberglass, organoplastics, carbon plastics and basaltoplastics.

5. The process according to claim 1 **characterized in that** the fiber of said fibrous structure is selected from the group including a glass fiber, an aramide fiber, a carbon fiber and a basalt fiber.

6. The process according to claim 1 **characterized in that** said fibrous structure is a thread, a braid, a mesh, a fabric or a tape.

7. The process according to claim 1 **characterized in that** said composite polymer material is a fiberglass and the fiber of said fibrous structure is a glass fiber.

8. The process according to claim 1 **characterized in that** the composite polymer material is an organoplastic, and a fiber of said fibrous structure is an aramide fiber.

9. The process according to claim 1 **characterized in that** the composite polymer material is a carbon plastic, and a fiber of said fibrous structure is a carbon fiber.

10. The process according to claim 1 **characterized in that** the composite polymer material is a basaltoplastic, and a fiber of said fibrous structure is a basalt fiber.

11. The process according to claim 1 **characterized in that** the manufactured composite article is selected from the group including pipes, containers and cylinders.

12. The process according to claim 1 **characterized in that** the manufactured composite article is a pipe.

13. A composite article for conveying and/or storage of liquid and gaseous media comprising
an internal sealing layer of polyolefin;
a layer of sevilene applied thereon in the form of a shell;
an external load-bearing layer made of a polymerized composite material; and
an additional layer formed by a fibrous structure having a good adhesion to the both sevilene coating of the sealing layer and to the composite polymer material forming the load-bearing layer and providing for an effective cohesion between said sealing and load-bearing layers, said additional layer being disposed between said layer of sevilene and said the polymerizable composite plastic material.

14. The article according to claim 13 **characterized in that** the sealing layer is made of polyethylene.

15. The article according to claim 13 **characterized in that** the sealing layer is made of polypropylene.

16. The article according to claim 13 **characterized in that** the composite plastic material is selected from the group including fiberglasses, organoplastics, carbon plastics, and basaltoplastics.

17. The article according to claim 13 **characterized in that** the fiber of said fibrous structure is selected from the group including a glass fiber, an aramide fiber, a carbon fiber and a basalt fiber.

18. The article according to claim 13 **characterized in that** said fibrous structure is a thread, a braid, a mesh, a fabric or a tape.

19. The article according to claim 13 **characterized in that** the composite polymer material is a fiberglass and the fiber of said fibrous structure is a glass fiber.

20. The article according to claim 13 **characterized in that** the composite polymer material is an organoplastic and the fiber of said fibrous structure is an aramide fiber.

21. The article according to claim 13 **characterized in that** the composite polymer material is a carbon plastic and the fiber of said fibrous structure is a carbon fiber.

22. The article according to claim 13 **characterized in that** the composite polymer material is basaltoplastic and the fiber of said fibrous structure is a basalt fiber.

23. The article according to claim 13 **characterized in that** said composite article is selected from the group including pipes, containers and cylinders.

24. The article according to claim 13 **characterized in that** said composite article is a pipe.

25. The article according to any one of claims 13-24 **characterized in that** said article is manufactures by the process according to claim 1.
